# EUROPÄISCHE PATENTANMELDUNG

(11) **EP 4 169 964 A1**
(43) Veröffentlichungstag der Anmeldung: **26.04.2023**
(21) Anmeldenummer: 22199240.7
(22) Anmeldetag: 30.09.2022
(51) Int. Cl.: C08G 18/32, C08G 18/42, C08G 18/79, C09D 175/06

(54) **POLYURETHANFILM ODER MEHRSCHICHTVERBUND MIT MINDESTENS EINER SCHICHT AUS DEM POLYURETHANFILM**

(30) Priorität: 22.10.2021 DE 102021211954
(71) Anmelder: Benecke-Kaliko AG, 30419 Hannover (DE)
(72) Erfinder: Neumann, Thorsten, 30165 Hannover (DE); Klaß, Michaela, 30165 Hannover (DE)
(74) Vertreter: Continental Corporation

(57) **Zusammenfassung**

Die Erfindung betrifft einen Polyurethanfilm oder Mehrschichtverbund mit mindestens einer Schicht aus dem Polyurethanfilm, wobei der Polyurethanfilm Polyurethan und Alginat enthält, und die Herstellung davon. Die Erfindung betrifft auch eine wässrige Polyurethan-Dispersion, die Polyurethan und Alginat enthält, welche zur Herstellung des Polyurethanfilms geeignet ist.

## Beschreibung

Die Erfindung betrifft einen Polyurethanfilm und einen Mehrschichtverbund mit mindestens einer Schicht aus dem Polyurethanfilm, eine wässrige Polyurethan-Dispersion, ein Verfahren zur Herstellung des Polyurethanfilms und die Verwendung von Alginat in Polyurethanfilmen.

Polyurethane im Bereich Filme und Kunstleder sind heute Stand der Technik. Diese Polyurethane basieren auf Polyestern, Polyethern, Polycarbonaten oder Mischungen derselben. Polyesterpolyurethane weisen meistens eine höhere Hydrolyseempfindlichkeit und damit auch eine bessere biologische Abbaubarkeit auf. Solche Polyesterpolyurethane, z.B. die Impranil^{®} DLN Typen von Covestro, werden als Beschichtung von Saatgut verwendet, die im Erdreich durch Bakterien, Pilze oder andere Mikroben zersetzt wird.

Die Abbaubarkeit der Polyurethane kann beispielweise über den Vernetzungsgrad oder die Abmischung mit anderen Polyurethan-Typen auf Basis von Polyestern, Polyethern oder Polycarbonaten eingestellt werden. Meist wird bei der Abmischung mit anderen Typen von Polyurethanen eine komplette Degradation des Materials nicht möglich sein; insbesondere die Polyether- und Polycarbonattypen weisen eine hohe Langzeitstabiliät auf.

Durch den Einsatz von Vernetzern, wie z.B. Isocyanaten, in der Polyurethan-Dispersion kann die Härte des Materials beeinflusst bzw. eingestellt werden. Oft ist eine weiche Haptik des Materials erwünscht. Hierfür sind einige Polyurethan-Typen aber nur bedingt geeignet. Allgemein kann durch die Vernetzung des Polyurethanfilms eine erhöhte Stabilisierung des Films erreicht werden, die Vernetzung führt aber auch zu einer erhöhten Härte, was für eine weiche Haptik unerwünscht sein kann.

Zur Herstellung von Polyurethanfilmen werden häufig wässrige Polyurethan-Dispersionen eingesetzt. Sofern eine Vernetzung erforderlich ist, werden Vernetzungsmittel bzw. Vernetzer eingesetzt, z.B. Vernetzer auf Isocyanatbasis.

In den wässrigen Polyurethan-Dispersionen werden gewöhnlich auch Verdicker eingesetzt, z.B. Polyurethan-basierte Verdicker. Die Verdicker dienen insbesondere zur Einstellung der Viskosität der Dispersion.

Polyurethane, z.B. solche die zur Einstellung der Degradation eingesetzt werden, sowie die eingesetzten Verdicker und Vernetzer sind in der Regel konventionelle chemische Substanzen. Es besteht ein steigendes Interesse an einem Ersatz solcher konventionellen chemischen Substanzen durch Substanzen auf Basis nachwachsender Rohstoffe, wie z.B. Biomoleküle oder Biopolymere.

Darüber hinaus ist die Lösungsmittelbeständigkeit von Polyurethanfilmen verbesserungsbedürftig, insbesondere wenn ein hoher Vernetzungsgrad durch Vernetzer nicht gewünscht ist.

Die Aufgabe besteht darin, in Filmform vorliegende Polyurethane, insbesondere Polyesterpolyurethane, durch die Interaktion mit einem Biomolekül oder Biopolymer zu schützen bzw. zu stabilisieren, so dass die Lösungsmittelbeständigkeit verbessert und/oder Abbaureaktionen, z.B. Hydrolyse, zeitlich gesteuert werden können. Darüber hinaus sollten alternative Vernetzungsmöglichkeiten bereitgestellt werden, um z.B. die Viskosität der zur Herstellung eingesetzten wässrigen Polyurethan-Dispersionen oder die Materialhärte der gebildeten Filme zu beeinflussen.

Die Erfinder haben überraschenderweise festgestellt, dass diese Aufgabe durch die Aufnahme des Biopolymers Alginat in wässrige Polyurethan-Dispersionen bzw. Polyurethanfilme gelöst werden kann.

Die Erfindung betrifft somit einen Polyurethanfilm oder einen Mehrschichtverbund, insbesondere Kunstleder, mit mindestens einer Schicht aus dem Polyurethanfilm, wobei der Polyurethanfilm Polyurethan und Alginat enthält.

Die Erfindung betrifft ferner eine wässrige Polyurethan-Dispersion, wobei die Dispersion Polyurethan und Alginat enthält.

Es wurde überraschenderweise festgestellt, dass die Aufnahme von Alginat in Polyurethanfilmen, insbesondere Polyesterpolyurethan-Filmen, zu einer Verbesserung der Stabilisierung der Polyurethansysteme führt, insbesondere hinsichtlich der Lösungsmittelbeständigkeit und/oder der Hydrolysestabilität. Dies ermöglicht eine gezielte Steuerung der Degradierung der Polyurethanfilme durch Alginate als Biopolymer. Die verbesserte Hydrolysestabilität ist insbesondere für hydrolyseempfindliche Polyurethane, wie z.B. Polyesterpolyurethane, von Bedeutung.

Ein weiterer Vorteil ist die mögliche Vernetzung durch Zugabe natürlicher Salze mehrwertiger Kationen zu den wässrigen Polyurethan-Dispersionen wie später erläutert. Dadurch kann auch eine Koagulierung der wässrigen Polyurethan-Dispersionen ermöglicht werden.

Nachfolgend wird die Erfindung ausführlich erläutert.

Die folgenden Angaben beziehen sich in gleicherweise auf den erfindungsgemäßen Polyurethanfilm und die erfindungsgemäße Polyurethan-Dispersion. Besonderheiten bzgl. Film bzw. Dispersion werden gesondert angeführt.

Der erfindungsgemäße Polyurethanfilm bzw. die erfindungsgemäße Polyurethan-Dispersion enthalten Polyurethan. Es können jeweils ein oder mehrere Polyurethane enthalten sein.

Das Polyurethan kann z.B. Polyesterpolyurethan, Polyetherpolyurethan, Polycarbonatpolyurethan oder Mischungen davon sein.

In einer bevorzugten Ausführungsform ist oder umfasst das Polyurethan Polyesterpolyurethan, besonders bevorzugt aliphatisches Polyesterpolyurethan. Es können ein oder mehrere Polyesterpolyurethane enthalten sein.

Ferner kann das Polyurethan ein carboxyfunktionalisiertes Polyurethan, insbesondere ein carboxyfunktionalisiertes Polyesterpolyurethan, sein oder umfassen.

In einer bevorzugten Ausführungsform ist das in dem Film bzw. der Dispersion enthaltene Polyurethan nur Polyesterpolyurethan. Es ist aber auch möglich, dass zusätzlich zu Polyesterpolyurethan ein oder mehrere andere Polyurethane enthalten sind, z.B. Polyetherpolyurethan und/oder Polycarbonatpolyurethan.

Wässrige Polyurethan-Dispersionen können zur Stabilisierung der Dispersion ionische Gruppen, wie Carboxylatgruppen oder Sulfatgruppen, oder nichtionische oberflächenaktive Gruppen, an der Latexoberfläche tragen bzw. Emulgatoren enthalten.

Die Festigkeit von Polyurethanfilmen wird einerseits durch die Kettenlänge und andererseits durch eine mögliche Ausbildung von Wasserstoffbrückenbindungen zwischen den Polyurethaneinheiten erhöht, wie in der folgenden schematischen Darstellung gezeigt.

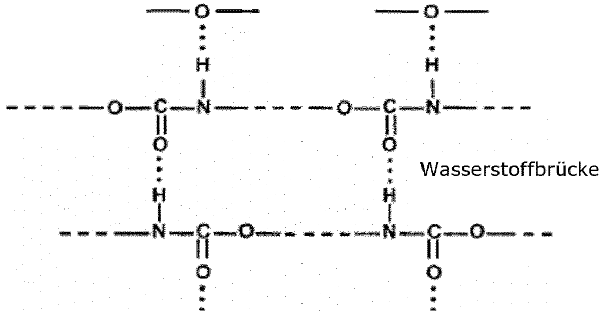

In einer bevorzugten Ausführungsform des Polyurethanfilms liegt der Gesamtgehalt an Polyurethan, bevorzugt Polyesterpolyurethan, im Bereich von 40 bis 99 Gew.-%, bevorzugt 60 bis 98 Gew.-%, bezogen auf das Gewicht des Polyurethanfilms (Trockengewicht). Entsprechend liegt der Gesamtgehalt an Polyurethan, bevorzugt Polyesterpolyurethan, in der erfindungsgemäßen wässrigen Polyurethan-Dispersion bevorzugt im Bereich von 40 bis 99 Gew.-%, bevorzugt 60 bis 98 Gew.-%, bezogen auf das Trockengewicht der wässrigen Polyurethan-Dispersion.

Wässrige Polyurethan-Dispersionen sind im Handel erhältlich. Beispiele für wässrige Polyesterpolyurethan-Dispersionen sind die Impranil^{®} DLN Typen von Covestro.

Der erfindungsgemäße Polyurethanfilm bzw. die erfindungsgemäße Polyurethan-Dispersion enthalten ferner Alginat. Es können jeweils ein oder mehrere Alginate enthalten sein. Alginate werden aus Braunalgen gewonnen. Die Alginate haben verdickende Eigenschaften und wirken somit als Verdicker.

Alginate sind Salze der Alginsäure. Es handelt sich um anionische Biopolymere, genauer gesagt Polysaccharide, die eine Carboxygruppe je Zuckereinheit tragen. Sie bestehen aus den Monomeruntereinheiten D-Mannuronsäure und L-Guluronsäure in unterschiedlichen Verhältnissen, wie nachstehend schematisch gezeigt.

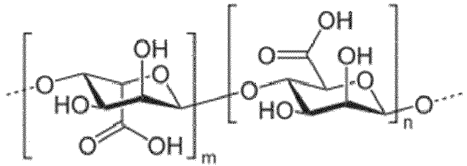

Je nach Polymerkettenlänge und pH-Wert sind diese Polymere in Wasser löslich und erhöhen teilweise deutlich die Viskosität.

Alginate schließen hier neben nicht funktionalisierten Alginaten auch funktionalisierte Alginate ein, insbesondere mit Ethylenglykol funktionalisierte Alginate. Mit Ethylenglykol funktionalisierte Alginate können mit einem Ethylenglykol-Monomer oder Ethylenglykol-Polymer, bevorzugt einem Ethylenglykol-Oligomer, funktionalisiert sein, die insbesondere als Seitengruppen im Alginat angebunden sind.

Das Alginat in dem Polyurethanfilm bzw. der wässrigen Polyurethan-Dispersion ist bevorzugt mindestens ein Alginat mit einem einwertigen Metallkation oder Ammoniumion, einem mehrwertigen, insbesondere zweiwertigen, Metallkation oder einer Mischung davon. Geeignete einwertige Metallkationen sind Natrium oder Kalium. Geeignete mehrwertige, insbesondere zweiwertige, Metallkationen sind Calcium und Magnesium.

Geeignete Alginate sind z.B. Natriumalginat, Kaliumalginat, Ammoniumalginat, Calciumalginat oder Magnesiumalginat oder eine Kombination davon. Die Natrium-, Kalium- und Ammoniumalginate sind wasserlöslich. Calciumalginate und Magnesiumalginate können Gele bilden.

Als Ausgangsmaterial für das Alginat können feste Alginate, z.B. als Pulver, verwendet werden, bevorzugt wasserlösliche Alginate wie z.B. Natriumalginate (E401). Diese sind im Handel erhältlich. Beispiele sind die Handelsprodukte Vivapur^{®}120, 127 und 150 der Firma JRS, bei denen es sich um Natriumalginate (E401) in Pulverform handelt.

Für die Zugabe zur wässrigen Polyurethandispersion wird das Alginat-Pulver zweckmäßigerweise zunächst in Wasser gelöst, um eine vollständige Quellung zu gewährleisten, und anschließend zugesetzt.

Durch den teilweisen oder vollständigen Austausch von einwertigen Gegenionen eines Alginats, z.B. Natrium oder Kalium, durch Zugabe von mehrwertigen, insbesondere zweiwertigen, Kationen, z.B. Calcium oder Magnesium, kommt es zu einer stabileren Komplexbildung und je nach Austauschgrad zur Ausbildung eines Hydrogels, welches nicht mehr in Wasser löslich ist.

Wenn ein Austausch von einwertigen Kationen, wie Na oder K, durch mehrwertige, insbesondere zweiwertige, Kationen, wie Ca oder Mg, durchgeführt wird, kann die Menge an zugesetzten mehrwertige Kationen z.B. so gewählt werden, dass ein Teil oder die Gesamtheit der Carboxygruppen des Alginats mit dem mehrwertigen Kation komplexiert werden. Das Verhältnis von einwertigen zu mehrwertigen, insbesondere zweiwertigen, Kationen kann entsprechend den gewünschten Eigenschaften eingestellt werden.

In einer bevorzugten Ausführungsform des Polyurethanfilms liegt der Gehalt an Alginat im Bereich von 0,1 bis 30 Gew.-%, bevorzugt 0,1 bis 5 Gew.-%, besonders bevorzugt 0,5 bis 5 Gew.-%, bezogen auf das Gewicht des Polyurethanfilms (Trockengewicht). Dies hängt jedoch z.B. von der Molekulargewichtsverteilung und der damit verbundenen verdickenden Wirkung ab.

In einer bevorzugten Ausführungsform der wässrigen Polyurethan-Dispersion liegt der Gehalt an Alginat im Bereich von 0,1 bis 30 Gew.-%, bevorzugt 0,1 bis 5 Gew.-%, besonders bevorzugt 0,5 bis 5 Gew.-%, bezogen auf das Trockengewicht der wässrigen Polyurethan-Dispersion. Dies hängt jedoch z.B. von der Molekulargewichtsverteilung und der damit verbundenen verdickenden Wirkung ab, sowie der Oberflächenladung der Polyurethanlatices sowie dem Feststoffgehalt der Polyurethan-Dispersion.

Die erfindungsgemäße wässrige Polyurethan-Dispersion weist bevorzugt einen Feststoffgehalt von 30 bis 65 Gew.-% auf.

Der erfindungsgemäße Polyurethanfilm bzw. die erfindungsgemäße Polyurethan-Dispersion können gegebenenfalls ferner ein oder mehrere Additive enthalten, wie sie auf dem Gebiet üblich sind.

In einer bevorzugten Ausführungsform kann die wässrige Polyurethan-Dispersion ferner mindestens einen Vernetzer als Additiv umfassen. Der Vernetzer dient zur Vernetzung des Polyurethans, indem dieser direkt mit den Polyurethanmolekülen reagiert und/oder in dem Film ein separates Netzwerk bildet, das die Stabilität des Films verbessert.

Der Vernetzer ist bevorzugt ein Vernetzer auf der Basis von Isocyanat, Melamin oder Carbodiimid. Durch Zugabe eines Vernetzers, insbesondere eines Vernetzers auf Isocyanatbasis, können die Härte und die Zugfestigkeit der aus den Dispersionen hergestellten Filme zum Teil deutlich erhöht werden.

Vernetzer auf Isocyanatbasis sind Verbindungen, die Isocyanatgruppen enthalten, oder Reaktionsprodukte davon. Ein Beispiel für einen Vernetzer auf Isocyanatbasis ist ein aliphatisches Polyisocyanat-Harz auf Basis von Hexamethylendiisocyanat, welches z.B. als Desmodur N3900 von Covestro erhältlich ist.

In einer bevorzugten Ausführungsform werden als Vernetzer Carbodiimide eingesetzt, da diese die Fähigkeit besitzen, sowohl das Alginat als auch carboxyfunktionalisierte Polyurethane zu vernetzen.

Ferner können auch multifunktionelle Vernetzersysteme bestehend aus Molekülen, die z.B. Isocyanate oder Carbodiimide in Kombination mit Silanvernetzern aufweisen, eingesetzt werden, z.B. Silangruppen-enthaltende Isocyanat-Vernetzer oder Silangruppen-enthaltende Carbodiimid-Vernetzer. Diese Typen enthalten neben den harten Vernetzergruppen, wie z.B. Carbodiimiden, zusätzlich Silangruppen, die ein weiches Siloxannetzwerk ausbilden können. Als Beispiel hierfür sind Vernetzer der Firma Stahl zu nennen, z.B. Permutex^{®} XR-13-554.

Dementsprechend ist in einer bevorzugten Ausführungsform der erfindungsgemäße Polyurethanfilm ein Polyurethanfilm, bei dem das Polyurethan ein durch einen Vernetzer vernetztes Polyurethan ist. Die vorstehenden Angaben zum Vernetzer für die wässrige Polyurethan-Dispersion gelten naturgemäß auch analog für den erfindungsgemäßen Polyurethanfilm.

Beispiele für weitere Additive, die in dem erfindungsgemäßen Polyurethanfilm bzw. der erfindungsgemäßen Polyurethan-Dispersion enthalten sein können, sind Farbstoffe, Pigmente, organische oder anorganische Füllstoffe, Verdicker, Flammschutzmittel, Mattierungsmittel, Verlaufshilfsmittel, Entschäumer, Gleitmittel, Rheologiehilfsmittel, Lichtschutzmittel, Stabilisatoren, Verstärkungsmittel, wie z.B. Fasern, Treibmittel, z.B. chemisch oder physikalisch wirkende Treibmittel, Tenside und/oder Biozide.

Beispiele für Flammschutzmittel sind Hydroxide, z.B. Aluminium- und Magnesiumhydroxide, Carbonate, z.B. Calciumcarbonate, organische und anorganische Phosphor- und Stickstoffverbindungen, Borverbindungen und Halogenverbindungen.

Die erfindungsgemäße wässrige, additivierte Polyurethan-Dispersion kann eine relativ hohe Viskosität aufweisen und z.B. in Form einer Paste vorliegen.

Die Mischungen aus wässriger Polyurethan-Dispersion und Alginat können in kompakte oder mechanisch oder chemisch geschäumte Filme bzw. Schichten überführt werden. Schäume können z.B. durch einen Schlagschaummischer erzeugt werden. Dazu werden der Mischung z.B. Schaumhilfsmittel und Schaumstabilisatoren (z.B. Stokal^{®} STA, Stokal^{®} SR) zugegeben.

Der Polyurethanfilm kann daher ein kompakter Film oder ein geschäumter Film sein. Die Schäume können dabei offenporig sein oder geschlossene Zellwände aufweisen.

Der erfindungsgemäße Polyurethanfilm kann als Monoschicht verwendet werden, z.B. als filmähnliche Polyurethanschicht oder Folie.

In einer bevorzugten Ausführungsform ist der erfindungsgemäße Polyurethanfilm als Schicht Bestandteil eines erfindungsgemäßen Mehrschichtverbunds, in der der Polyurethanfilm mit einer oder mehreren weiteren Schichten kombiniert ist. Der Mehrschichtverbund kann einen oder mehrere erfindungsgemäße Polyurethanfilme enthalten. Der erfindungsgemäße Polyurethanfilm und der erfindungsgemäße Mehrschichtverbund kann z.B. Kunstleder, ein Film, eine Folie, ein Bodenbelag oder ein Wandbelag sein, z.B. für Innen- und Außenanwendungen, Möbel sowie Anwendungen im Bereich von Fahrzeugen, insbesondere Automobilen.

In einer besonders bevorzugten Ausführungsform ist der erfindungsgemäße Mehrschichtverbund mit mindestens einer Schicht aus dem erfindungsgemäßen Polyurethanfilm ein Kunstleder.

Ein Kunstleder ist ein Mehrschichtverbund, der in dieser Reihenfolge eine Deckschicht, welche meist als farbgebende Schicht eingefärbt ist, eine Zwischenschicht, die meist als geschäumte Schicht vorliegt, um die Haptik zu verbessern, eine Kaschierschicht und einen textilen Träger umfasst, wobei die Kaschierschicht zur Anbindung des textilen Trägers dient. Gegebenenfalls kann auf der Deckschicht noch eine Lackschicht aufgebracht werden, die z.B. als Schutzschicht dient. Die Lackschicht ist häufig transparent oder transluzent.

Deckschicht, Zwischenschicht, und Kaschierschicht werden oft auch als Deckstrich, Zwischenstrich bzw. Kaschierstrich bezeichnet.

Das als Kunstleder eingesetzte mehrschichtige Verbundmaterial wird gewöhnlich durch ein herkömmliches narbgebendes Verfahren mit einer Ledernarbung, Textilnarbung oder einer technischen Oberfläche versehen. Es können übliche narbgebende Verfahren verwendet werden, z.B. Stahlprägen, Vakuumprägen oder Silikonprägen.

Der erfindungsgemäße Polyurethanfilm wird in dem Kunstleder gewöhnlich als Deckschicht, Zwischenschicht oder/und Kaschierschicht eingesetzt. Der Polyurethanfilm kann dabei als kompakte Schicht oder als geschäumte Schicht vorliegen.

Der erfindungsgemäße Polyurethanfilm und der erfindungsgemäße Mehrschichtverbund eignen sich insbesondere für Anwendungen im Bereich Automotive, wie z.B. Automobildachhimmel oder Automobilinnenraum, oder als Möbelfolien, Bodenbeläge, Wandbeläge oder Sitzmaterialen, einschließlich Automobilsitze. Diese Anwendungen können im Bereich Interieur, Exterieur, Mobility oder Contract, wie z.B. Hotelketten, Kinos, Heimanwendungen, Flugzeuge, Bus und Bahn, Kreuzfahrtschiffe (nautische Anwendung) eingesetzt werden.

Die Erfindung betrifft auch ein Verfahren zur Herstellung eines erfindungsgemäßen Polyurethanfilms oder Mehrschichtverbunds wie vorstehend beschrieben, wobei das Verfahren umfasst
a) das Aufbringen einer erfindungsgemäßen wässrigen Polyurethan-Dispersion auf ein Substrat und
b) das Trocknen der aufgebrachten Polyurethan-Dispersion unter Bildung des Polyurethanfilms.

Alle vorstehenden Angaben zu dem erfindungsgemäßen Polyurethanfilm, dem erfindungsgemäßen Mehrschichtverbund und der erfindungsgemäßen wässrigen Polyurethan-Dispersion, einschließlich der genannten Beispielen und bevorzugten Ausführungsformen, gelten selbstredend entsprechend für das erfindungsgemäße Verfahren. Es wird daher auf diese Angaben verwiesen.

Die erfindungsgemäße wässrige Polyurethan-Dispersion wird zweckmäßigerweise durch Zugabe von Alginat und gegebenenfalls einem oder mehreren weiteren Additiven zu einer wässrigen Polyurethan-Dispersion hergestellt.

Für die Zugabe des Alginats zur wässrigen Polyurethan-Dispersion kann z.B. zunächst ein Pulver des Alginats, bevorzugt ein Alginat von einem einwertigen Kation, z.B. Natriumalginat und/oder Kaliumalginat, in Wasser gelöst werden, um eine vollständige Quellung zu gewährleisten. Ferner können auch Ethylenglykolfunktionalisierte Alginate verwendet werden. Diese unterstützen nebenbei auch die Schaumstabilität und Zerfallen bei Temperaturen oberhalb von 120°C in das entsprechende Alginat sowie Ethylenoxid. Nachteilig hierbei erweist sich, dass bei Mono- und Oligo-Ethylenglykolseitenketten diese nach der Abspaltung in der flüssigen Phase vorliegen und die Emissionen wie auch die Migrationsbeständigkeit beeinflussen. Sofern werden vorzugsweise Polyethylenglykol-Seitenketten verwendet, welche auch gleichzeitig die Weichheit des Materials erhöhen. Diese Alginattypen werden vorzugsweise in Wasser gequollen und dann zur wässrigen Polyurethandispersion gegeben.

Zusätzlich besteht die Möglichkeit, die Alginate teilweise oder vollständig mit mehrwertigen Kationen, wie z.B. Calcium- und Magnesiumionen, zu komplexieren, so dass ein Netzwerk auf Basis ionischer Wechselwirkungen entsteht. Die mehrwertigen Kationen, wie z.B. Calcium oder Magnesium, können in Form wässriger Lösungen ihrer Salze zugegeben werden, z.B. zur wässrigen Polyurethan-Dispersion vor, während oder nach Zugabe des Alginats bzw. der Wasser-Alginat-Mischung. Beispiele für geeignete Salze mehrwertiger Kationen sind Halogenide, insbesondere Chloride, Sulfate und Nitrate von mehrwertigen Kationen, wie Calcium oder Magnesium, z.B. Calciumchlorid, Magnesiumchlorid, Calciumsulfat, Magnesiumsulfat, Calciumnitrat oder Magnesiumnitrat. Die Salze mehrwertiger Kationen werden bevorzugt in Form wässriger Lösungen, bevorzugt hochkonzentrierter wässriger Lösungen, zur Polyurethan-Dispersion zugesetzt.

In einer bevorzugten Ausführungsform wird daher in dem erfindungsgemäßen Verfahren zur Bildung der wässrigen Polyurethan-Dispersion das Alginat in Form eines Alginats mit einem einwertigen Kation, z.B. Natriumalginat und/oder Kaliumalginat, zur einer wässrigen Polyurethan-Dispersion gegeben und der wässrigen Polyurethan-Dispersion wird eine wässrige Lösung eines Salzes eines mehrwertigen Kations, insbesondere eines Calciumsalzes und/oder eines Magnesiumsalzes, zugesetzt, um die Carboxygruppen des Alginats teilweise oder vollständig mit dem mehrwertigen Kation zu komplexieren.

Sofern eine solche Komplexierung mit einem mehrwertigen Kation durchgeführt wird, kann es z.B. zweckmäßig sein, die Menge an zugesetzten mehrwertigen Kationen so zu wählen, dass 0,1 bis 60%, bevorzugt 0,1 bis 20%, der Carboxygruppen des Alginats mit dem mehrwertigen Kation komplexiert werden. Durch diese Komplexierung wird auch die verdickende Wirkung gesteuert.

Es besteht dabei die Möglichkeit, die Mischung aus Polyurethan-Dispersion mit geladenen anionischen Oberflächen und Alginaten mit diesen wässrigen Lösungen mehrwertiger Kationen zur Koagulierung zu bringen. Dabei entsteht ein Hydrogel aus Alginat und Polymerdispersion. Dieses kann getrocknet werden und der entstehende Film in seiner Weichheit über die Weichheit der Polymerdispersion, das Verhältnis zum Alginat und den Restfeuchtegehalt eingestellt werden.

Ein besonderer Vorteil der teilweisen oder vollständigen Komplexierung des in der Polyurethan-Dispersion enthaltenen Alginats mit den mehrwertigen, insbesondere zweitwertigen, Kationen besteht darin, eine erhöhte Stabilisierung des daraus gebildeten Polyurethanfilms zu erreichen, ohne die Härte des gebildeten Polyurethanfilms deutlich zu verändern. Beim Einsatz von herkömmlichen Vernetzern, wie z.B. Vernetzern auf Polyisocyanatbasis, kann zwar ebenfalls eine Stabilisierung des daraus gebildeten Polyurethanfilms erreicht werden, allerdings wird dadurch auch die Härte des Films oft deutlich erhöht.

Ein weiterer Vorteil des Einsatzes von Alginat gegenüber üblichen Verdickern, z.B. Polyurethan-basierten Verdickern, besteht darin, dass die sonst üblichen Probleme mit der Migration der Verdicker an die Oberfläche des Polyurethanfilms vermieden werden können.

Bei Polyurethanen in Dispersionen, welche ebenfalls ionische Gruppen wie Carboxylate oder Sulfate an der Latexoberfläche zur Stabilisierung der Dispersion tragen, sind bei Einsatz von Alginat auch ionische Netzwerkbildungen mit dem Verdicker möglich. Dies verhindert einerseits, dass Verdickermoleküle aus dem Film migrieren können, andererseits stabilisiert dies den Film gegen Lösemittel, welche keinen Einfluss auf die ionische Wechselwirkung haben können. In einer bevorzugten Ausführungsform kann zu der Mischung aus Alginat und Polyurethandispersion ein relativ geringer Anteil von ca. 0,1-5 Gew.-% Alginat, bezogen auf das Trockengewicht der Polyurethan-Dispersion, in Abhängigkeit von den ionischen Gruppen auf der Polyurethandispersion zugegeben und ein Film wie nachstehend beschrieben hergestellt werden.

Das Aufbringen der wässrigen Polyurethan-Dispersion, gegebenenfalls in Form einer Paste, auf das Substrat kann nach gängigen Verfahren durchgeführt werden, z.B. durch Streichen, Sprühen, Drucken, Gießen oder via reverse Roll-coater.

Die auf das Substrat aufgebrachte Polyurethan-Dispersion wird dann getrocknet, um das Wasser zu entfernen und den Polyurethanfilm zu bilden. Bei der Trocknung kann gegebenenfalls auch eine Vernetzung des Polyurethans durch enthaltene Vernetzer erfolgen, was zu einer erhöhten Härte des Films führt.

Die Trocknung der aufgebrachten Polyurethan-Dispersion erfolgt gewöhnlich bei einer erhöhten Temperatur, z.B. bei einer Temperatur im Bereich von 80 bis 200 °C.

Der gebildete Polyurethanfilm kann auf dem Substrat verbleiben. Das Substrat kann beispielsweise Teil eines zu bildenden Mehrschichtverbunds sein, z.B. eines zu bildenden Kunstleders.

Der gebildete Polyurethanfilm kann alternativ von dem Substrat, z.B. einem Narbband oder einem Release-Papier, abgelöst werden, um einen eigenständigen Film zu bilden, z.B. in Form einer Folie.

In einer bevorzugten Ausführungsform wird ein Umkehrverfahren durchgeführt, bei dem die wässrigen Polyurethan-Dispersion oder -Paste auf ein geeignetes erstes Substrat, z.B. ein Narbband oder ein Release-Papier, aufgebracht wird, z.B. durch Aufstreichen, und der nach der Trocknung gebildete Polyurethanfilm, auf ein zweites Substrat übertragen wird, wobei das erste Substrat abgelöst wird. Das zweite Substrat kann z.B. einen Teil eines Mehrschichtverbunds, bevorzugt Kunstleder, bilden.

Die Erfindung betrifft des Weiteren die Verwendung von Alginat in Polyurethanfilmen, insbesondere den erfindungsgemäßen Polyurethanfilmen, als Stabilisierungsmittel, insbesondere zur Erhöhung der Lösungsmittelbeständigkeit des Polyurethanfilms und/oder zur Erhöhung der Hydrolysebeständigkeit des Polyurethanfilms.

Die erhöhte Lösungsmittelbeständigkeit äußert sich insbesondere durch eine verringerte Quellung und/oder eine verringerte Löslichkeit der Polyurethanfilme in dem Lösungsmittel. Beispiele für die Lösungsmittel sind anorganische Lösungsmittel, insbesondere Wasser, und organische Lösungsmittel, wie z.B. Alkohole, Ketone, Ether oder Ester, wie z.B. Ethylacetat, Methylethylketon oder Tetrahydrofuran. Die Hydrolysebeständigkeit bezieht sich auf den hydrolytischen Abbau der Polyurethanfilme, was insbesondere für hydrolyseempfindliche Polyurethane, wie Polyesterpolyurethane von Bedeutung ist. Dies wurde beispielsweise auch bei Filmen auf Basis von Formulierungen ohne Vernetzer festgestellt.

Die Erfindung betrifft des Weiteren die Verwendung von Alginat in wässrigen Polyurethan-Dispersionen als Verdicker und/oder als Stabilisierungsmittel, insbesondere zur Erhöhung der Lösungsmittelbeständigkeit des daraus gebildeten Polyurethanfilms und/oder Erhöhung der Hydrolysebeständigkeit des daraus gebildeten Polyurethanfilms wie vorstehend beschrieben.

Die Erhöhung der Lösungsmittelbeständigkeit und/oder Erhöhung der Hydrolysebeständigkeit des Polyurethanfilms bezieht sich dabei auf den Vergleich mit einem Polyurethanfilm, der gleich ist, außer dass kein Alginat enthalten ist, oder mit einem Polyurethanfilm, der gleich ist, außer dass statt des Alginats ein anderer üblicher Verdicker enthalten ist, z.B. ein Polyurethan-basierter Verdicker.

Alle vorstehenden Angaben zu dem erfindungsgemäßen Polyurethanfilm, dem erfindungsgemäßen Mehrschichtverbund und der erfindungsgemäßen wässrigen Polyurethan-Dispersion, einschließlich der genannten Beispielen und bevorzugten Ausführungsformen, gelten entsprechend für die erfindungsgemäßen Verwendungen. Es wird daher auf diese Angaben verwiesen.

Die Erfindung betrifft ferner allgemein einen Polymerfilm oder Mehrschichtverbund mit mindestens einer Schicht aus dem Polymerfilm, wobei der Polymerfilm ein Polymer und Alginat enthält. Als Polymer eignen sich dabei außer Polyurethan, das vorstehend speziell erläutert wurde, alternativ andere Polymere, insbesondere organische Polymere.

Bevorzugte Beispiele für solche anderen Polymere sind Polyester, Polyamide, Polyvinylbutyral, Polyamide und Polyolefine. Polyester, Polyvinylbutyral, Polyamide und Polyolefine können ebenfalls wässrige Dispersionen bilden. Dementsprechend umfasst die Erfindung neben dem Polyurethanfilm auch andere Polymerfilme, bevorzugt ausgewählt aus einem Polyesterfilm, Polyvinylbutyralfilm, Polyamidfilm oder Polyolefinfilm, die Alginat enthalten, sowie einen Mehrschichtverbund mit mindestens einer Schicht aus dem Polymerfilm.

In einer bevorzugten Ausführungsform des erfindungsgemäßen Polymerfilms oder Mehrschichtverbunds ist das Alginat mindestens ein Alginat mit einem einwertigen Metallkation oder Ammoniumion, einem mehrwertigen, insbesondere zweiwertigen, Metallkation, oder einer Mischung davon ist.

In einer weiteren bevorzugten Ausführungsform des erfindungsgemäßen Polymerfilms oder Mehrschichtverbunds ist das Alginat ausgewählt ist aus Natriumalginat, Kaliumalginat, Ammoniumalginat, Calciumalginat, Magnesiumalginat oder einer Kombination davon.

In einer weiteren bevorzugten Ausführungsform des erfindungsgemäßen Polymerfilms oder Mehrschichtverbunds liegt der Gehalt an Alginat im Bereich von 0,1 bis 30 Gew.-%, bevorzugt 0,1 bis 5 Gew.-%, bevorzugter 0,5 bis 5 Gew.-%, bezogen auf das Gewicht des Polymerfilms.

In einer weiteren bevorzugten Ausführungsform des erfindungsgemäßen Polymerfilms oder Mehrschichtverbunds ist das Polymer ein durch einen Vernetzer vernetztes Polymer.

In einer weiteren bevorzugten Ausführungsform des erfindungsgemäßen Polymerfilms oder Mehrschichtverbunds ist der Mehrschichtverbund ein Kunstleder.

Die Erfindung betrifft ferner allgemein eine wässrige Polymer-Dispersion, wobei die Polymer-Dispersion Polymer und Alginat enthält. Als Polymer eignen sich dabei außer Polyurethan, das vorstehend speziell erläutert wurde, alternativ andere Polymere, insbesondere organische Polymere. Das Polymer ist bevorzugt ausgewählt aus Polyurethan (wie vorstehend beschrieben), Polyester, Polyvinylbutyral, Polyamid und Polyolefin.

In einer bevorzugten Ausführungsform der erfindungsgemäßen wässrigen Polymer-Dispersion ist das Alginat mindestens ein Alginat mit einem einwertigen Metallkation oder Ammoniumion, einem mehrwertigen, insbesondere zweiwertigen, Metallkation, oder einer Mischung davon, wobei das Alginat bevorzugt ausgewählt ist aus Natriumalginat, Kaliumalginat, Ammoniumalginat, Calciumalginat, Magnesiumalginat oder einer Kombination davon.

In einer weiteren bevorzugten Ausführungsform der erfindungsgemäßen wässrigen Polymer-Dispersion liegt der Gehalt an Alginat im Bereich von 0,1 bis 30 Gew.-%, bevorzugt 0,1 bis 5 Gew.-%, bevorzugter 0,5 bis 5 Gew.-%, bezogen auf das Trockengewicht der Polymer-Dispersion.

In einer weiteren bevorzugten Ausführungsform der erfindungsgemäßen wässrigen Polymer-Dispersion umfasst die Dispersion ferner mindestens einen Vernetzer. Als Vernetzer kommen alle Vernetzer in Frage, die für das jeweilige Polymer üblich sind. Solche Vernetzer sind dem Fachmann bekannt.

Die Erfindung betrifft ferner ein Verfahren zur Herstellung eines erfindungsgemäßen Polymerfilms oder Mehrschichtverbunds mit mindestens einer Schicht aus dem Polymerfilm wie vorstehend beschrieben, umfassend
a) das Aufbringen einer erfindungsgemäßen wässrigen Polymer-Dispersion wie vorstehend beschrieben auf ein Substrat und
b) das Trocknen der aufgebrachten Polymer-Dispersion unter Bildung des Polymerfilms.

In einer bevorzugten Ausführungsform umfasst das erfindungsgemäße Verfahren einen Schritt, bei dem
der gebildete Polymerfilm auf dem Substrat verbleibt, wobei das Substrat Teil eines zu bildenden Mehrschichtverbunds, wie ein Kunstleder, sein kann oder der gebildete Polymerfilm von dem Substrat abgelöst wird oder
der gebildete Polymerfilm mittels eines Umkehrbeschichtungsverfahrens von dem Substrat, auf dem der Film gebildet wurde, auf ein anderes Substrat übertragen wird, wobei das andere Substrat Teil eines zu bildenden Mehrschichtverbunds, wie ein Kunstleder, sein kann.

In einer weiteren bevorzugten Ausführungsform des erfindungsgemäßen Verfahrens wird zur Bildung der wässrigen Polymer-Dispersion das Alginat in Form eines Alginats mit einem einwertigen Kation, z.B. Natriumalginat und/oder Kaliumalginat, zur einer wässrigen Polymer-Dispersion gegeben und der wässrigen Polymer-Dispersion wird eine wässrige Lösung eines Salzes eines mehrwertigen Kations, insbesondere eines Calciumsalzes und/oder eines Magnesiumsalzes, zugesetzt, um die Carboxygruppen des Alginats teilweise oder vollständig mit dem mehrwertigen Kation zu komplexieren.

Die Erfindung betrifft ferner die Verwendung von Alginat in Polymerfilmen als Stabilisierungsmittel, insbesondere zur Erhöhung der Lösungsmittelbeständigkeit und/oder Erhöhung der Hydrolysebeständigkeit des Polymerfilms. Bevorzugte Polymerfilme sind neben den ausführlich erläuterten Polyurethanfilmen Polyesterfilme, Polyvinylbutyralfilmen, Polyamidfilme und Polyolefinfilme wie vorstehend beschrieben.

Die Erfindung betrifft ferner die Verwendung von Alginat in wässrigen Polymer-Dispersionen als Verdicker und/oder als Stabilisierungsmittel, insbesondere zur Erhöhung der Lösungsmittelbeständigkeit und/oder Erhöhung der Hydrolysebeständigkeit des daraus gebildeten Polymerfilms. Bevorzugte Polymer-Dispersionen sind neben den ausführlich erläuterten Polyurethan-Dispersionen, Polyester-Dispersionen, Polyvinylbutyral-Dispersionen, Polyamid-Dispersionen und Polyolefin-Dispersionen wie vorstehend beschrieben.

Alle vorstehenden Angaben zu Polyurethanfilmen, wässrigen Polyurethan-Dispersionen, Verfahren zur Herstellung der Polyurethanfilme und der Verwendung der Polyurethanfilme bzw. Polyurethan-Dispersionen gelten analog auch allgemein für die erfindungsgemäßen Polymerfilme, wässrigen Polymer-Dispersionen, Verfahren zur Herstellung der Polymerfilme und der Verwendung der Polymerfilme bzw. Polymer-Dispersionen, soweit anwendbar, so dass darauf verwiesen wird.

Die Erfindung wird nun anhand von Beispielen weiter erläutert.

### Beispiele

Zum Erstellen eines biologisch abbaubaren Films oder Kunstlederverbundes wird die wässrige Polyesterpolyurethan-Dispersion Impranil^{®} DLN von Covestro verwendet. Eine Standardrezeptur enthält dabei Additive wie Pigmente, Farbstoffe, Füllstoffe auf organischer oder anorganischer Basis sowie Vernetzer und Verdicker. Durch Zugabe von Vernetzer, insbesondere auf Isocyanatbasis (z.B. Desmodur N3900), kann die Härte und Zugfestigkeit der Filme zum Teil deutlich erhöht werden. Ein konkretes Beispiel für eine verwendete Standardformulierung ist nachstehend angegebene Formulierung A. Zur Herstellung erfindungsgemäßer Filme wurde Alginat in unterschiedlichen Mengen zugesetzt, wobei das Alginat den üblichen Verdicker in der Standardformulierung ersetzt.

Als Alginate wurden Vivapur 120, 127 und 150 von der Firma JRS verwendet. Es handelt sich um Natriumalginate (E401). Diese unterscheiden sich in ihrer Ausgangspartikelgröße, ihrem Molekulargewicht und der verdickenden Wirkung (Viskosität für 1% in demineralisiertem H₂O, Brookfield, 20 °C, 60 U/min):

| | Partikelgröße | Viskosität | Molekulargewicht MW |
|---|---|---|---|
| Vivapur^{®}127 | 30-620 µm | 750-950 mPas | -400 kD |
| Vivapur^{®}120 | 30-620 µm | 20-50 mPas | -100 kD |
| Vivapur^{®}150 | 80-197 µm | 20-50 mPas | -100 kD |

Für die Zugabe zur Polyurethandispersion wurde das jeweilige Alginat-Pulver zunächst in Wasser gelöst, um eine vollständige Quellung zu gewährleisten.

Interessanterweise wurde festgestellt, dass die Zugabe von Alginaten zu den Polyurethandispersionen einerseits je nach Alginattyp zu einem teilweise starken Anstieg der Viskosität führt und andererseits die erhaltenen Filme eine deutlich verbesserte Resistenz gegenüber Lösungsmitteln wie Ethylacetat aufweisen. Dies ist auch der Fall, wenn kein Vernetzer wie beispielsweise auf Isocyanatbasis vorliegt. Eine Koagulierung der Polyurethandispersion wurde nicht festgestellt.

Die Filme wurden durch Aufstreichen der Polyurethan-Paste auf ein geeignetes Substrat (Umkehrverfahren; Narbband oder Release Papier) und anschließendem Trocknungsgang zur Entfernung des Wassers bei ca. 80 bis 200 °C erhalten.

Ohne sich an eine Theorie binden zu wollen, wird angenommen, dass Wasserstoffbrückenbindungen zwischen den Alginat- und Polyurethanmolekülen ausgebildet werden. Obwohl das Polyurethanlatex an der Oberfläche der Latexpartikel auch anionische Gruppen, beispielsweise Sulfate oder Carboxylate, trägt, kommt es in dem wässrigen Medium noch nicht zu dieser Bindungsbildung. Diese wird erst beim Trocknen der Dispersion und dem Verschmelzen der Polyurethanpartikel erreicht.

Filme mit einer Alginat-Konzentration von 1 Gew.-% (trocken) wurden auf ihre Löslichkeit gegenüber den Lösungsmitten Ethylacetat, Methylethylketon und Tetrahydrofuran untersucht. Die Filme blieben intakt und zeigten nur eine geringe Quellung.

Ferner wurden Polyurethanfilme mit unterschiedlichen Alginatanteilen von 0,1-1 Gew.-% bei 120 °C und 100 % Luftfeuchtigkeit für 16 h im Autoklaven gelagert. Dabei wurde überraschenderweise festgestellt, dass die Filme mit höheren Anteilen an Alginat eine bessere Beständigkeit gegenüber Hydrolyse (höhere Stabilität) aufwiesen. Es war erwartet worden, dass diese Biomoleküle einen leichteren hydrolytischen Abbau gewährleisten würden als vergleichbare synthetische Verdickersysteme auf Polyurethanbasis.

Diese Stabilität war darin zu erkennen, dass die Filme ohne Alginatanteil sich vollständig zu einer Flüssigkeit zersetzt hatten, während bei einem Anteil von 1% Alginat der Film zwar in seinen mechanischen Eigenschaften geschwächt aber stabil war.

Bei einer Hydrolyselagerung von Polyurethanfilmen in deionisiertem Wasser bei 80 °C zeigten sich nach einer Prüfzeit von 1 Woche vergleichbare Ergebnisse: Die Filme, die einen alternativen, synthetischen Verdicker wie beispielsweise Borchi Gel L75N (Verdicker auf Polyurethanbasis) enthielten, zerfielen in kleine Bruchstücke, während die Filme mit einem Alginatanteil zwischen 0,1% und 1% stabil waren. Dabei wurde festgestellt, dass ein höherer Anteil an Alginat einen mechanisch stabileren Film erzielte. Durch Erhöhung des Vernetzeranteils wurde die Stabilität des Films erhöht.

Beispielsweise wurden auf Basis der folgenden Formulierungen A, B und C Polyurethanfilme wie vorstehend beschrieben hergestellt und bezüglich der Hydrolysestabilität bei Hydrolyselagerung in deionisiertem Wasser bei 80 °C für 1 Woche und 3 Wochen getestet.

Die Mengenangaben der zugegebenen Bestandteile der Formulierungen beziehen sich auf Gewichtsteile, wobei Wasseranteile, insbesondere der zugesetzten Dispersionen und Batches, bei der Mengenangabe berücksichtigt sind.

| | |
|---|---|
| lmpranil^{®}DLN W 50 | wässrige Polyesterpolyurethan-Dispersion von Covestro, Feststoffgehalt 47-53 Gew.-% |
| Irganox^{®}245-DW | Antioxidationsmittel von BASF |
| Heliobeit^{®}LW 904 | Pigmentpaste von Helio Beit |
| Borchigel^{®}L75 N | Verdicker auf Polyurethanbasis eingesetzt als Batch 50 % H₂O |
| Vivapur^{®}FD 127 | Natriumalginat von JRS, eingesetzt als Batch 5% H₂O) |
| Desmodur^{®} eco N 7300 | Vernetzer auf Isocyanatbasis von Covestro |

| Formulierung | A* | B | C |
|---|---|---|---|
| Impranil DLN W 50 | 100,0 | 100,0 | 100,0 |
| Irganox 245-DW | 2,0 | 2,0 | 2,0 |
| Heliobeit LW 904 | 1,0 | 1,0 | 1,0 |
| Borchigel L75 N 50 % | 3,0 | | |
| Vivapur FD 127 5% | | 10,0 | 10,0 |
| Desmodur eco N 7300 | 0,8 | 0,8 | 5,0 |

| | | | |
|---|---|---|---|
| * Vergleichsbeispiel | | | |

Nach der Hydrolyselagerung wurden die behandelte PU-Filmen anhand der folgenden Bewertungsskala optisch bewertet:
0 unverändert
1 leicht verändert
2 zerfällt bei Berührung
3 zerfällt bei Schütteln
4 zerfällt in sehr kleine Stückchen
5 flüssig

Folgende Ergebnisse wurden ermittelt.

| Formulierung | A | B | C |
|---|---|---|---|
| Hydrolyse 80 °C 7d in dest. H2O | 3 | 1 | 1 |
| Hydrolyse 80 °C 21d in dest. H2O | 4 | 3 | 2 |

## Patentansprüche

1. Polyurethanfilm oder Mehrschichtverbund mit mindestens einer Schicht aus dem Polyurethanfilm, wobei der Polyurethanfilm Polyurethan und Alginat enthält.

2. Polyurethanfilm oder Mehrschichtverbund nach Anspruch 1, wobei das Polyurethan Polyesterpolyurethan, Polyetherpolyurethan, Polycarbonatpolyurethan oder eine Mischung davon umfasst oder ist, wobei das Polyurethan bevorzugt ein Polyesterpolyurethan ist oder umfasst.

3. Polyurethanfilm oder Mehrschichtverbund nach einem der vorhergehenden Ansprüche, wobei das Alginat mindestens ein Alginat mit einem einwertigen Metallkation oder Ammoniumion, einem mehrwertigen, insbesondere zweiwertigen, Metallkation oder einer Mischung davon ist.

4. Polyurethanfilm oder Mehrschichtverbund nach einem der vorhergehenden Ansprüche, wobei das Alginat ausgewählt ist aus Natriumalginat, Kaliumalginat, Ammoniumalginat, Calciumalginat, Magnesiumalginat oder einer Kombination davon.

5. Polyurethanfilm oder Mehrschichtverbund nach einem der vorhergehenden Ansprüche, wobei der Gehalt an Alginat im Bereich von 0,1 bis 30 Gew.-%, bevorzugt 0,1 bis 5 Gew.-%, bevorzugter 0,5 bis 5 Gew.-%, bezogen auf das Gewicht des Polyurethanfilms, liegt.

6. Polyurethanfilm oder Mehrschichtverbund nach einem der vorhergehenden Ansprüche, wobei das Polyurethan ein durch einen Vernetzer vernetztes Polyurethan ist, wobei der Vernetzer bevorzugt ein Vernetzer auf Isocyanatbasis, einschließlich eines Silangruppen enthaltenden Vernetzers auf Isocyanatbasis, ein Melamin-Vernetzer oder ein Carbodiimid-Vernetzer, einschließlich eines Silangruppen enthaltenden Carbodiimid-Vernetzers, ist.

7. Polyurethanfilm oder Mehrschichtverbund nach einem der vorhergehenden Ansprüche, wobei der Mehrschichtverbund ein Kunstleder ist.

8. Wässrige Polyurethan-Dispersion, wobei die Polyurethan-Dispersion Polyurethan und Alginat enthält, wobei das Polyurethan Polyesterpolyurethan, Polyetherpolyurethan, Polycarbonatpolyurethan oder eine Mischung davon umfasst oder ist, wobei das Polyurethan bevorzugter ein Polyesterpolyurethan ist oder umfasst.

9. Wässrige Polyurethan-Dispersion nach Anspruch 7, wobei das Alginat mindestens ein Alginat mit einem einwertigen Metallkation oder Ammoniumion, einem mehrwertigen, insbesondere zweiwertigen, Metallkation, oder einer Mischung davon ist, wobei das Alginat bevorzugt ausgewählt ist aus Natriumalginat, Kaliumalginat, Ammoniumalginat, Calciumalginat, Magnesiumalginat oder einer Kombination davon.

10. Wässrige Polyurethan-Dispersion nach Anspruch 7 oder Anspruch 8, wobei der Gehalt an Alginat im Bereich von 0,1 bis 30 Gew.-%, bevorzugt 0,1 bis 5 Gew.-%, bevorzugter 0,5 bis 5 Gew.-%, bezogen auf das Trockengewicht der Polyurethan-Dispersion, liegt.

11. Wässrige Polyurethan-Dispersion nach einem der Ansprüche 7 bis 9, ferner umfassend mindestens einen Vernetzer, wobei der Vernetzer bevorzugt ein Vernetzer auf Isocyanatbasis, einschließlich eines Silangruppen enthaltenden Vernetzers auf Isocyanatbasis, ein Melamin-Vernetzer oder ein Carbodiimid-Vernetzer, einschließlich eines Silangruppen enthaltenden Carbodiimid-Vernetzers, ist.

12. Verfahren zur Herstellung eines Polyurethanfilms oder Mehrschichtverbunds nach einem der Ansprüche 1 bis 6, umfassend
a) das Aufbringen einer wässrigen Polyurethan-Dispersion nach einem der Ansprüche 7 bis 10 auf ein Substrat und
b) das Trocknen der aufgebrachten Polyurethan-Dispersion unter Bildung des Polyurethanfilms.

13. Verfahren nach Anspruch 11, wobei
der gebildete Polyurethanfilm auf dem Substrat verbleibt, wobei das Substrat Teil eines zu bildenden Mehrschichtverbunds, wie eines Kunstleders, sein kann oder der gebildete Polyurethanfilm von dem Substrat abgelöst wird oder
der gebildete Polyurethanfilm mittels eines Umkehrbeschichtungsverfahrens von dem Substrat, auf dem der Film gebildet wurde, auf ein anderes Substrat übertragen wird, wobei das andere Substrat Teil eines zu bildenden Mehrschichtverbunds, wie ein Kunstleder, sein kann.

14. Verfahren nach Anspruch 11 oder Anspruch 12, wobei zur Bildung der wässrigen Polyurethan-Dispersion das Alginat in Form eines Alginats mit einem einwertigen Kation, z.B. Natriumalginat und/oder Kaliumalginat, zur einer wässrigen Polyurethan-Dispersion gegeben wird und der wässrigen Polyurethan-Dispersion eine wässrige Lösung eines Salzes eines mehrwertigen Kations, insbesondere eines Calciumsalzes und/oder eines Magnesiumsalzes, zugesetzt wird, um die Carboxygruppen des Alginats teilweise oder vollständig mit dem mehrwertigen Kation zu komplexieren.

15. Verwendung von Alginat in Polyurethanfilmen als Stabilisierungsmittel, insbesondere zur Erhöhung der Lösungsmittelbeständigkeit des Polyurethanfilms und/oder Erhöhung der Hydrolysebeständigkeit des Polyurethanfilms.

16. Verwendung von Alginat in wässrigen Polyurethan-Dispersionen als Verdicker und/oder als Stabilisierungsmittel, insbesondere zur Erhöhung der Lösungsmittelbeständigkeit des daraus gebildeten Polyurethanfilms und/oder Erhöhung der Hydrolysebeständigkeit des daraus gebildeten Polyurethanfilms.
